# EUROPEAN PATENT SPECIFICATION

(11) **EP 2 902 613 B1**
(45) Date of publication and mention of the grant of the patent: **31.01.2018**
(21) Application number: 14290015.8
(22) Date of filing: 31.01.2014
(51) Int. Cl.: F02B 37/16, F02M 35/12, F02M 35/14

(54) **Air noise reduction device**
Luftgeräuschminderungsvorrichtung
Dispositif de réduction de bruit

(43) Date of publication of application: 05.08.2015
(73) Proprietor: MANN + HUMMEL GMBH, 71636 Ludwigsburg (DE)
(72) Inventor: Raimbault, Vincent, 53230 Cosmes (FR); Baert, Gautier, 53000 Laval (FR); Raguenet, Wilfrid, 78700 Confins Sainte Honorine (FR)

(56) References cited:
- EP-A1- 2 685 081
- WO-A1-2005/017329
- FR-A1- 2 924 172
- US-A1- 2004 134 460
- US-A1- 2009 178 879

## Description

### TECHNICAL FIELD

The present invention relates to a technique for reducing noise of an internal combustion engine, particularly of a vehicle.

The invention relates more particularly to an arrangement for reducing noise generated by an air supply system of a motor vehicle during operation of the engine.

It notably finds application in a turbocharged engine of a motor vehicle.

### BACKGROUND OF THE INVENTION

In recent years, steps have been taken to reduce noise generated by the engines of vehicles with the objective of increasing the quietness of the passenger compartment of the vehicles.

An important contribution to automobile noise originates from its air supply system, in particular from parts such as air filters.

In a turbocharged engine, intake air is directed in an air filter delivering clean air to a compressor of a turbocharger.

The compressed air leaving the turbocharger is directed through a charge air cooler before the cooled air reaches the air inlet side of the intake manifold plenum.

In case of excess pressure from the turbocharger, air can be recirculated into the air filter upstream of the compressor inlet via a pressure release valve (also known as a dump valve or a blow-off valve).

Such a valve is to prolong turbocharger life by releasing unwanted boost pressure from the air inlet tract when it is no longer required and to avoid an effect known as "surge phenomenon".

The flow of recirculated air into the air filter generates unwanted noise, in particular jet noise, which is due to the high flow rate when the pressure release valve opens.

It has been proposed to tune the relative dimensions of the air filter or to use silencers in order to reduce the magnitude and/or frequency of this noise.

For example US 2009 178879 A1 discloses an air filter with an additional inlet opening that corresponds with the environment, wherein the additional opening is covered with a noise absorbing cover material.

However, these solutions have proved to be inefficient because of the wide noise band.

There is a continuing need for noise reducing arrangements capable of lowering air noise levels in a vehicle engine, in particular jet noise, without a significant detrimental effect on engine performance.

### SUMMARY OF THE INVENTION

The present invention is to remedy these drawbacks by proposing a noise reduction device adapted for being mounted within an air supply system of an internal combustion engine so that air can pass through said device.

According to the invention, such a device comprises:
- a housing comprising at least one wall defining a hollow enclosure, said at least one wall being provided with at least one through hole, and
- a sound absorbing element located partly inside said hollow enclosure,
said device being configured to allow the passage of air through said sound absorbing element into the enclosure and the passage of air from the inside to the outside of said enclosure through said at least one through hole.

Thus, the invention concerns an acoustic or anti-noise device for an internal combustion engine of a vehicle, in particular for an internal combustion engine equipped with a turbocompressor or a turbocharger.

The invention provides a technique to minimize the radiation of noise from the air routing system of an internal combustion engine during operation of the engine.

The device of the invention is used in a part of the air supply system and comprises a noise absorbing element disposed inside a housing having perforated walls.

It is arranged within the air supply system so that air enters inside the housing through the noise absorbing element (to achieve this, air is introduced into said noise absorbing element) and exits the housing through the orifices disposed on the wall(s) of the housing. Both the housing and the noise absorbing element perform noise attenuation.

Noise emanating from ducts or conduits used to convey air to an internal combustion engine is thus eliminated, or at least attenuated.

The device of the invention also filters blow by gas and ensures filtration of the air.

The device is a unitary device, keeping parts complexity and assembly time to a minimum. It is reliable, compact, cheap to manufacture, easy to assemble and replace.

Such a device may be installed inside the conduits or parts (air filter for instance) of the air supply system of an internal combustion engine.

In accordance with another aspect of the present invention, said enclosure comprises an opened face, the sound absorbing element being adapted to sealingly close said opened face when said noise reduction device is mounted within said air supply system.

The complexity of assembly is reduced since it is not required to implement a seal, sealing between the inside of the housing and the noise absorbing element being provided by the latter.

It is however necessary that a pressure is applied on the noise absorbing element so that it is compressed against the edge of the opened face.

In accordance with another aspect of the present invention, said sound absorbing element comprises a first part located outside said enclosure and a second part located within said enclosure, said first part being adapted to sealingly come into contact with the edge or circumference of said opened face when said noise reduction device is mounted within said air supply system.

In accordance with another aspect of the present invention, said sound absorbing element is configured to allow the passage of air through said first part into the enclosure via said second part, when said noise reduction device is mounted within said air supply system.

It is the first part of the sound absorbing element in coaction with the housing of the noise reduction device and an inclined wall of the filter. This arrangement provides sealing of the device and ensures that air introduced into the device flows through the sound absorbing element and the orifices provided in the housing. The sound absorbing element is configured to allow a sealing between the housing of the noise reduction device and an inclined wall of the air filter. The sealing is achieved by compression of the material of the sound absorbing element in the area between the housing and the . inclined wall.

In accordance with another aspect of the present invention, said sound absorbing element is formed from open-porous material, e.g. open celled foam.

Sound absorbing material such as an open-celled foam may be used.

Such a foam allows gases to flow therethrough and is adapted to absorb acoustical energy from gases coming in contact therewith.

In accordance with another aspect of the present invention, the average pore size of the porous material is between 500 µm and 2000 µm.

In accordance with another aspect of the present invention, said housing comprises fastening means to a duct or part of said air supply system.

In accordance with another aspect of the present invention, said fastening means comprise connection means for rotationally connecting said noise reduction device to a duct or part of said air supply system.

In accordance with another aspect of the present invention, said fastening means comprise at least one flexible element for releasably locking said noise reduction device in a duct or part of said air supply system.

In accordance with another aspect of the present invention, said housing comprises at least one counter-pressure element designed to maintain said sound absorbing element into the enclosure, when said noise reduction device is mounted within said air supply system.

The present invention also proposes an air filter for an internal combustion engine comprising a noise reduction device as described previously.

In one possible application, the anti-noise device of the invention is fitted inside an air filter and is designed to attenuate the sound pressure level generated by the flowing air. The flowing air is not only filtered by the air filter element but also by the device of the invention.

In other words, the device of the invention reduces (or dampens) the noise when the air filter is operating (i.e. during operation of the engine), in particular jet noise, without a significant detrimental effect on engine performance.

It improves the acoustic performance of an air filter for an internal combustion engine, whilst maintaining air filtration performance.

In accordance with another aspect of the present invention, said air filter comprises a chamber for receiving said noise reduction device and an air inlet arranged for introducing air into said noise reduction device.

This also allows easy access to fit and remove the device, and to replace the sound absorbing element.

### BRIEF DESCRIPTION OF THE DRAWINGS

The features of the noise reduction device, which is the subject of the invention, are described in greater detail by referring to the attached non-limiting drawings in which:
Figures 1A, 1B and 1C are different views of the housing of the noise reduction device in accordance with an illustrative embodiment of the present invention.
Figures 2A and 2B are oblique views of the sound absorbing element of the noise reduction device in accordance with the embodiment of the present invention shown in Figures 1A to 1C.
Figure 3 is a perspective view of the noise reduction device in which the sound absorbing element of Figures 2A and 2B is partly disposed inside the housing of Figures 1A to 1C.
Figure 4 shows a part of an air filter of a turbocharged engine, in particular the outlet of the pipe connecting the outlet of the compressor to the air filter housing. The outlet of the pipe is the inlet into the air filter.
Figures 5 to 7 are different views showing the air filter of Figure 4 in which is disposed the noise reduction device of Figure 3.

### DETAILED DESCRIPTION

A detailed description of an exemplary embodiment of the invention follows with reference to the figures provided.

In the embodiment described below, the noise reduction device (or acoustic device, or noise filtering device) is implemented within an air filter of an air supply system of an engine like an engine for a vehicle or a stationary engine or an engine for construction machines.

In another embodiment, that does not form a part of the invention, the noise reduction device may be implemented in an air duct or in any part of an air supply system of an engine.

The noise reduction device according to the invention is provided particularly for turbocharged or turbocompressed engines, which may be provided with a one-stage or two-stage turbocharger or turbocompressor.

Such engines have an air bypass, which is opened or closed by a pressure release valve in order to compensate the compressor overpressure, e.g. during high transient engine load, mainly from high loads to low demands of engine torque or power. This bypass line supplies the excess compressed air back to the air filter upstream of the compressor, the air filter delivering clean air to the compressor.

It is to be noted that the recirculated air may comprise oil and/or hydrocarbon vapors.

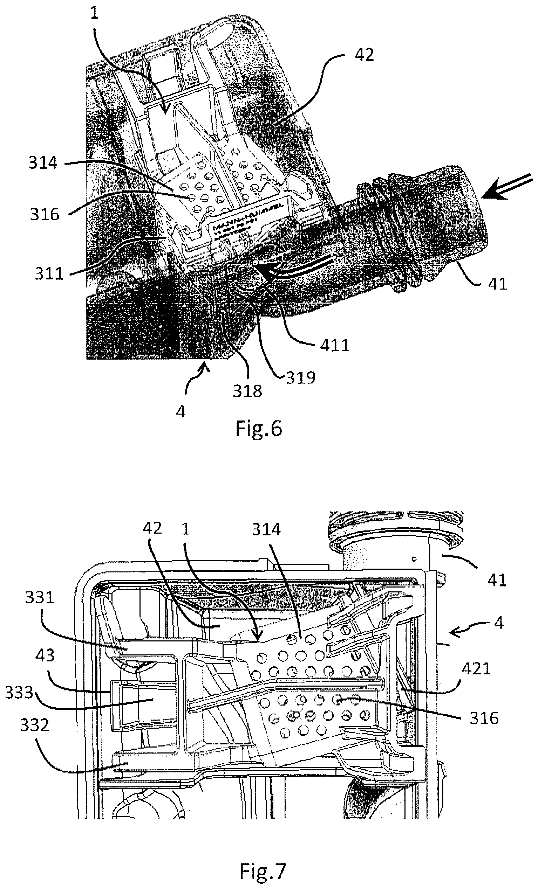

In the embodiment described below, the noise reduction device of the invention is located at the exhaust of the pressure release valve. More precisely, the noise reduction device is disposed within the air filter 4 at the outlet 411 of the return air inlet 41, as shown in Figures 6 and 7.

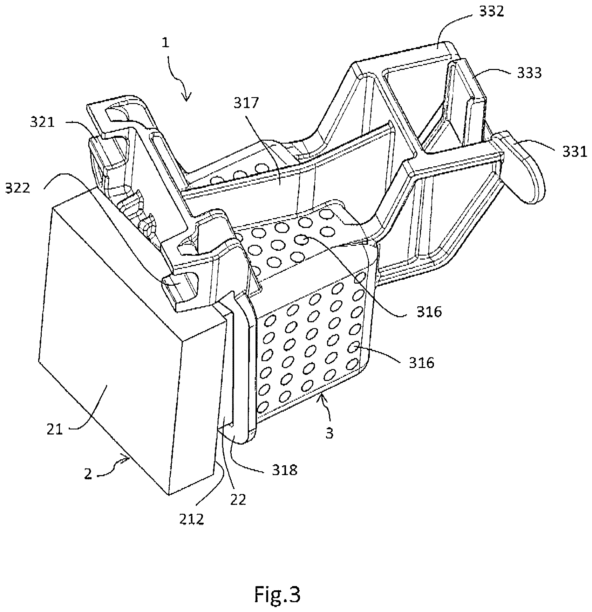

As shown in Figure 3, the noise reduction device 1 comprises a housing, or box, 3 and a sound absorbing element, an open-cell foam element 2 in this example, which is partly inserted inside the housing 3.

When the pressure release valve is opened, the recirculated air flows in the return air inlet 41 and is forced through the noise reduction device 1. Jet noise levels are reduced because of the reduction of air flow velocity which is due to the absorbing properties of the foam element 2 (diffusion phenomenon).

The noise reduction device 1 is designed so that the air pressure loss is minimized without a significant detrimental effect on engine performance.

In order to limit the soiling of the air filter element located within the air filter 4, the foam element 2 also captures the oil coming from the turbocompressor and the hydrocarbon vapors coming from the pressurized air line.

In other words, the noise reduction device 1 ensures attenuation of the air noise and/or filtration of the air before passing through the air filter element of the air filter 4.

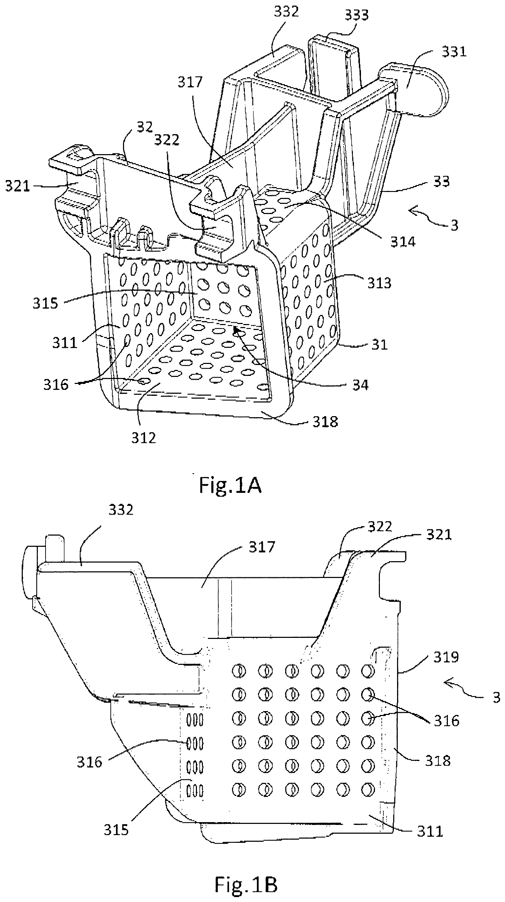

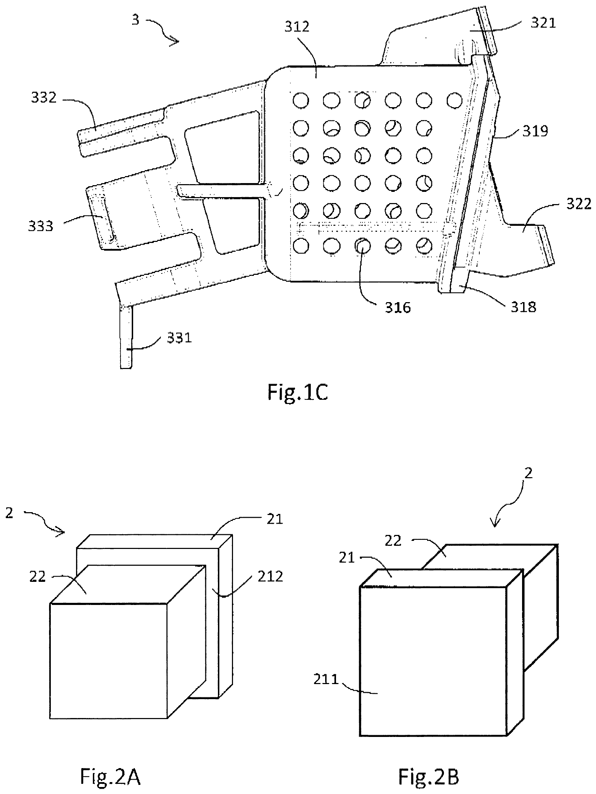

Figures 1A, 1B and 1C are different views of the housing 3.

The housing 3 is made of plastic in this example and is obtained by injection molding. Other materials and/or manufacturing processes may be used.

The housing 3 comprises an enclosure 31 defining an inner volume or cavity 34. The hollow enclosure 31 is of cubic shape roughly and comprises five walls (or faces) 311, 312, 313, 314, 315. It also comprises an opened face 319 (Figure 2) having a flange 318 on its periphery.

Holes 316 of circular shape are provided in each of the walls 311, 312, 313, 314, 315, and are regularly spaced in each wall defining substantially a square pattern. The holes 316 are extending through the walls 311, 312, 313, 314, 315, to allow the passage of air therethrough.

The holes 316 are designed so as to ensure that the air pressure loss is minimized and that the noise reduction is maximized.

The holes 316 may be arranged in a regular pattern on the surface of one or several of the walls 311, 312, 313, 314, 315, such as in concentric circles, or in spiral, or in a random pattern, or in a combination of different patterns. The holes 316 may also be concentrated in specific areas.

The arrangement, number and size of holes may vary for each application.

The holes may be oval, or of square shape. They may also be designed as slits.

The shape of the enclosure 31 is cubical, in this example, but may be different, depending on functional constraints. It may be pyramidal or hexagonal for instance.

Figures 2A and 2B are perspective views of the foam element 2.

The foam element 2 is in polyurethane (abbreviated "PU") in this example, such a material being porous and air permeable.

The average pore size of the foam material is between 500 µm and 2000 µm, preferably between 600 µm and 1800 µm. Foam materials having pore sizes of 620 µm, 1200 µm or 1800 µm, may be used for instance. The permeability of the foam depends on the foam grade or supplier (cells diameter, tortuosity...).

The foam element 2 is unitarily formed and comprises a first part 21 and a second part 22. Alternatively the foam element 2 can consist of at least two parts.

The cross section of the second part 22 is square and slightly smaller than the cross section of the opened face 319 of the enclosure 31. The second part 22 is adapted to fit inside the inner volume or cavity 34 of the enclosure 31, as shown in Figure 3. The foam element 2 is held mechanically inside the housing 3 by the second part 22. The second part 22 fits tightly into the cavity 34 of the enclosure 31, in this example.

The cross section of the first part 21 is square and larger than the cross section of the opened face 319 of the enclosure 31. The first part 21 is adapted to sealingly come into contact against the flange 318 of the housing 3, and sealingly close the opened face 319. More precisely, it is the back surface 212 of the first part 21, which comes into contact against the flange 318 of the housing 3.

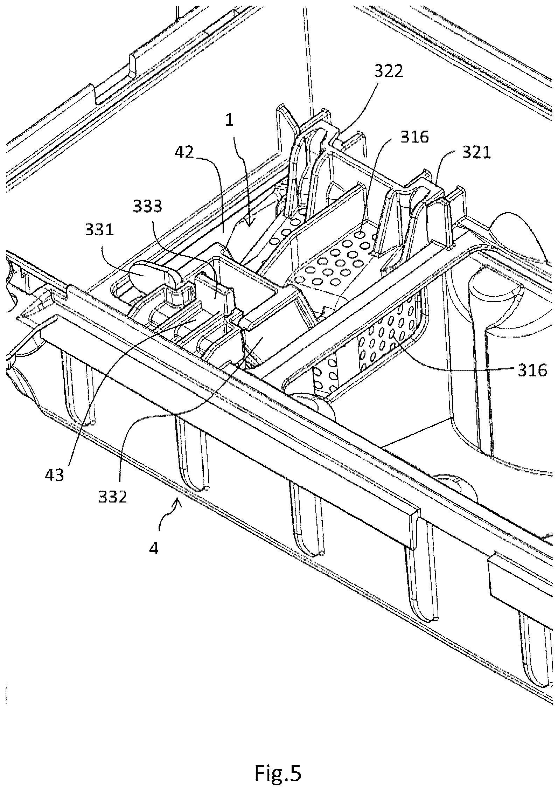

In Figure 3, the noise reduction device 1 is shown before being mounted within an air filter 4 (Figures 5 to 7). In Figure 3, the back surface 212 of the foam element 2 is thus not compressed against the flange 318 of the housing 3. Due to the fact that the opened face 319 of the housing 3 is slanted, the back surface 212 of the foam element 2 is only partly in contact with the flange 318 in Figure 3.

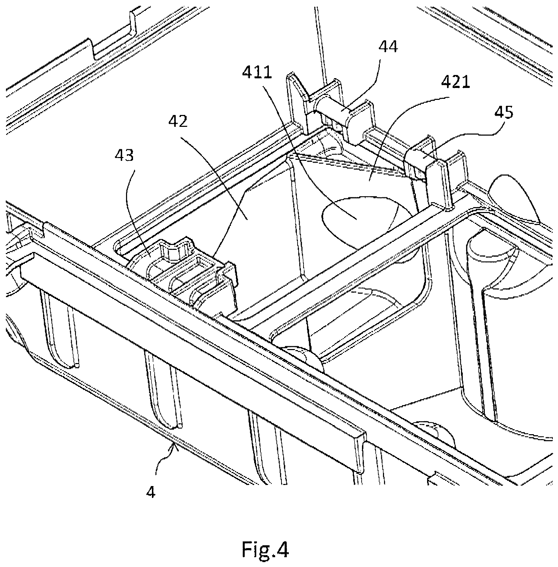

Figure 4 shows a part of the air filter 4, in particular the internal airflow chamber 42 in which the noise reduction device 1 is fitted.

The cover of the air filter and the air filter element are not represented.

The chamber 42 comprises an inclined wall 421 in which the outlet 411 of the pipe 41 connecting the compressor to the air filter air 4 ends up. The outlet 411 is of round cross section.

When the noise reduction device 1 is fitted in the chamber 42, the front surface 211 of the first part 21 of the foam element 2 is sandwiched between the slanted flange 318 and the inclined wall 421 of the chamber 42 (the first part 21 thus performs dispersion compensation between the flange 318 and wall 421), and the foam element 2 is compressed inside the housing 3.

It is to be noted that the diameter of the outlet 411 is smaller than the width of the first part 21 and preferably smaller than the width of the second part 22so that the first part 21 closes the outlet 411 and air coming from the outlet 411 (return air flow) is forced to flow through the foam element 2 inside the enclosure 31 of the housing 3.

Air flow direction into the pipe 41 and into the foam element 2 is illustrated by arrows in Figure 6.

The foam compression area for device sealing corresponds to the circumference of the opened face 319 of the housing 3.

Although it is not visible in Figures 6 and 7, the back surface 212 of the foam element 2 is also compressed against the flange 318 and is in sealing contact with the circumference of the opened face 319 of the housing 3. Thus, air flowing through the foam element 2 inside the cavity 34 of the enclosure 31 cannot escape through the opened face 319 of the housing 3, but exits the cavity 34 of the housing 3 through the holes 316.

Air exiting the holes 316 (and thus the noise reduction device 1) is then directed towards the air filter element (not represented) of the air filter 4. There is a gap (or space) between the outside walls 311, 312, 313, 314, 315 of the housing 3 and the inside surface of the chamber 42 for air to flow.

In order to guarantee the air flow passing through the foam element 2 and through the housing 3, sealing is managed by the compression rate of the foam element 2. The compression of the foam element 2 against and inside the housing 3 decreases the size of its open cells (and thus decreases permeability), thus increasing the pressure drop and allowing relative air tightness.

Air is forced to flow through the foam element 2 inside the cavity 34 and through the housing 3 via the holes 316, both the housing 3 and the foam element 2 having an acoustic effect on the noise.

If an optimized sealing is not provided, the return air flow may flow around the foam element 2 and escape via the opened face 319. By providing relative sealing, the return air flow passes through the noise reduction device 1.

Through the adoption of the structural design of the noise reduction device 1, the noises can be reduced, so that the comfort of a driver can be guaranteed.

The use of the foam element 2 to manage sealing by its compression guarantees the acoustic effect of the device 1 which is managed by the air flow going through the foam element 2 and the housing 3.

Due to the described sealing system (i.e. compression of the porous material ensuring air tightness and sealing), the complexity of the noise reduction device 1 is reduced, as less components are involved (there is no sealing gasket required), and the design is simplified. The solution of the invention is also compact.

Figures 5 to 7 are different views showing the air filter of Figure 4 in which the noise reduction device 1 of Figure 3 is mounted. Figure 6 only shows part of the assembly (the foam element 2 is not represented for instance).

The noise reduction device 1 is pivotally mounted within the housing 42 and comprises two open claws 321, 322 (shown in Figures 1A to 1C, 3, 5 and 6) carried by a part 32, which extends from one side of the flange 318, above the wall 314. Pivot axes 44, 45 arranged above the chamber 42 of the air filter 4 are snap fitting into the claws 321, 322.

The noise reduction device 1 also comprises a further part 33 extending from said bottom wall 315, the part 33 carrying a central flexible retaining clip 333 disposed between two counter pressure elements 331, 332.

The retaining clip 333 allows releasable locking of the noise reduction device 1 within the chamber 42 (Figures 5 and 7). In order to fit the reduction device 1 inside the chamber 42, it is necessary to fit the axes 44, 45 into the claws 321, 322 and to pivot the housing 3 inside the chamber 42, before engaging the clip 333 with a corresponding element 43 of the air filter 4.

An ergonomic rib 317 links the part 32 and the part 33 of the housing 3.

Such a rib 317 facilitates grasping of the noise reduction device 1.

It thus appears clearly that the mounting and withdrawal of the noise reduction device 1 within the air filter 4 is relatively easy.

It is to be noted that the counter pressure elements 331, 332 are designed to compress and maintain the foam element 2 within the housing 3 when the noise reduction device 1 is fitted within the air filter 4.

The part 32 may carry only one claw. However, two claws 321, 322 are provided, in this example, so as to facilitate the mounting of the noise reduction device 1 and to hold firmly in position the latter within the air filter 4.

The positioning of the claws 321, 322 also provides lateral positioning of the noise reduction device 1 within the chamber 42.

Counter pressure parts may also be provided on the exterior surface of the lateral walls 311, 313.

The solution of the invention thus minimizes the radiation of noise from conduits or parts conducting air to an internal combustion engine of a vehicle, such as a turbocharged engine.

The solution of the invention can be applied to all types of turbocharged engines (provided with a one-stage or two-stage turbocharger for instance).

The noise reduction device of the invention is reliable, compact, cheap to manufacture and easy to assemble (and disassemble). It offers significant savings in engine compartment space and materials, manufacturing, installation, servicing and recycling costs.

The foam element 2 may thus be easily replaced periodically (at the same time as the air filter for instance).

The above embodiments are to be understood as illustrative examples of the invention.

Further embodiments of the invention are envisaged.

In particular, the geometry and dimensions of the housing and sound absorbing element are not limited to the ones illustrated in the annexed figures.

Also, in further examples that do not form a part of the invention, the noise reduction device may be placed in any air duct (such as in the return air pipe 41 of Figures 6 and 7), or in any other part of the air supply system, so that at least a proportion of the air flow is obliged to pass through it.

Additional sealing means may be provided to optimize sealing between the noise absorbing element and the housing.

The means for fastening and locking the noise absorbing element within the air filter, or within a duct or any other part of the air supply system, are not limited to the ones described above.

It is to be understood that any feature described in relation to one embodiment may also be used in other of the embodiments. Furthermore, modifications not described above may also be employed without departing from the scope of the invention, which is defined in the accompanying claims.

Throughout the description and claims of this specification, the words "comprise" and "contain" and variations of them mean "including but not limited to", and they are not intended to (and do not) exclude other components.

## Claims

1. Air supply system of an internal combustion engine having an air filter and a noise reduction device (1) that is being mounted within the air supply system so that air can pass through said device (1), said device (1) comprising
- a housing (3) comprising at least one wall (311, 312, 313, 314, 315) defining a hollow enclosure (31), said at least one wall (311, 312, 313, 314, 315) being provided with at least one through hole (316), and
- a sound absorbing element (2) located partly inside said hollow enclosure (31),
wherein said noise reduction device (1) is configured to allow the passage of air through said sound absorbing element (2) into the enclosure (31) and the passage of air from the inside to the outside of said enclosure (31) through said at least one through hole (316),
**characterized in that** the air supply system further comprises an air bypass, which is opened or closed by a pressure release valve, andthe noise reduction device (1) is installed inside said air filter, wherein in case of excess pressure from a compressor or a turbocharger, the excess compressed air is recirculated through the noise reduction device (1) into said air filter upstream of the compressor or turbocharger inlet via the air bypass.

2. Air supply system according to claim 1, **characterized in that** said enclosure (31) comprises an opened face (319), the sound absorbing element (2) being adapted to sealingly close said opened face (319).

3. Air supply system according to 2, **characterized in that** said sound absorbing element (2) comprises a first part (21) located outside said enclosure (31) and a second part (22) located within said enclosure (31), said first part (21) being adapted to sealingly come into contact with the circumference of said opened face (319).

4. Air supply system according to claim 3, **characterized in that** said sound absorbing element (2) is configured to allow the passage of air through said first part (21) into the enclosure (31) via said second part (22).

5. Air supply system according to claim 4, **characterized in that** said sound absorbing element (2) is configured to allow a sealing between the said housing (3) of said noise reduction device (1) and an inclined wall (421) of the air filter (4), wherein the sealing is achieved by compression of the material of the sound absorbing element (2) in the area between the housing (3) and the inclined wall (421).

6. Air supply system according to any one of claims 1 to 5, **characterized in that** said sound absorbing element (2) is formed from open-porous material.

7. Air supply system according to claim 6, **characterized in that** the average pore size of the porous material is between 500 µm and 2000 µm.

8. Air supply system according to any one of claims 1 to 7, **characterized in that** said housing (3) comprises fastening means (321, 322, 333) to a duct or part of said air supply system.

9. Air supply system according to claim 8, **characterized in that** said fastening means comprise connection means (321, 322) for rotationally connecting said noise reduction device (1) to a duct or part of said air supply system.

10. Air supply system according to claim 8 or 9, **characterized in that** said fastening means comprise at least one flexible element (333) for a detachable connection of said noise reduction device (1) in a duct or part of said air supply system.

11. Air supply system according to any one of claims 1 to 10, **characterized in that** said housing (3) comprises at least one counter-pressure element (331, 332) designed to maintain said sound absorbing element (2) into the enclosure (31).

12. Air supply system according to any one of the previous claims, **characterized in that** the sound absorbing element (2) is configured to filter the blow by gas flowing through said sound absorbing element (2) and ensures filtration of the air.

13. Air filter (4) for an air supply system for an internal combustion engine according to any of the previous claims, **characterized in that** the air filter (4) comprises a chamber (42) for receiving said noise reduction device (1) and has an air inlet (411) arranged for introducing air into said noise reduction device (1).

## Patentansprüche

1. Luftzufuhrsystem einer Brennkraftmaschine mit einem Luftfilter und einer Vorrichtung zur Geräuschreduzierung (1), die in dem Luftzufuhrsystem eingebaut wird, so dass Luft durch die Vorrichtung (1) strömen kann, bei der die Vorrichtung (1)
- ein Gehäuse (3), umfassend mindestens eine Wand (311, 312, 313, 314, 315), welche eine hohle Umschließung (31) begrenzt, bei der die mindestens eine Wand (311, 312, 313, 314, 315) mit mindestens einem Durchgangsloch (316) versehen ist, und
- ein schalldämpfendes Element (2) umfasst, das teilweise in der hohlen Umschließung (31) angeordnet ist,
wobei die Vorrichtung zur Geräuschreduzierung (1) konfiguriert ist, um Luft durch das schalldämpfende Element (2) in die Umschließung (31) und Luft von innen nach außen der Umschließung (31) durch das mindestens eine Durchgangsloch (316) strömen zu lassen,
**dadurch gekennzeichnet, dass**
das Luftzufuhrsystem weiterhin einen Luft-Bypass umfasst, welcher durch ein Überdruckventil geöffnet oder geschlossen wird und die Vorrichtung zur Geräuschreduzierung (1) in dem Luftfilter eingebaut ist, wobei bei einem Überdruck eines Kompressors oder eines Turboladers die überschüssige Druckluft durch die Vorrichtung zur Geräuschreduzierung (1) in den dem Kompressor vorgelagerten Einlass des Luftfilters oder des Turboladers über den Luft-Bypass rückgeführt wird.

2. Luftzufuhrsystem nach Anspruch 1, **dadurch gekennzeichnet, dass** die Umschließung (31) eine offene Seite (319) umfasst, bei der das schalldämpfende Element (2) ausgelegt ist, um die offene Seite (319) dichtend zu schließen.

3. Luftzufuhrsystem nach Anspruch 2, **dadurch gekennzeichnet, dass** das schalldämpfende Element (2) ein außerhalb der Umschließung (31) angeordnetes erstes Teil (21) und ein innerhalb der Umschließung (31) angeordnetes zweites Teil (22) umfasst, bei der das erste Teil (21) ausgelegt ist, um mit dem Umfang der offenen Seite (319) dichtend in Kontakt zu kommen.

4. Luftzufuhrsystem nach Anspruch 3, **dadurch gekennzeichnet, dass** das schalldämpfende Element (2) konfiguriert ist, um Luft durch das erste Teil (21) in die Umschließung (31) über das zweite Teil (22) strömen zu lassen.

5. Luftzufuhrsystem nach Anspruch 4, **dadurch gekennzeichnet, dass** das schalldämpfende Element (2) konfiguriert ist, um eine Abdichtung zwischen dem Gehäuse (3) der Vorrichtung zur Geräuschreduzierung (1) und einer geneigten Wand (421) des Luftfilters (4) zu ermöglichen, wobei die Abdichtung durch die Verdichtung des Materials des schalldämpfenden Elements (2) in dem Bereich zwischen dem Gehäuse (3) und der geneigten Wand (421) erreicht wird.

6. Luftzufuhrsystem nach einem der Ansprüche 1 bis 5, **dadurch gekennzeichnet, dass** das schalldämpfende Element (2) aus offenporigem Material geformt ist.

7. Luftzufuhrsystem nach Anspruch 6, **dadurch gekennzeichnet, dass** die durchschnittliche Porengröße des porösen Materials zwischen 500 µm und 2000 µm liegt.

8. Luftzufuhrsystem nach einem der Ansprüche 1 bis 7, **dadurch gekennzeichnet, dass** das Gehäuse (3) Befestigungsmittel (321, 322, 333) für eine Leitung oder für einen Teil des Luftzufuhrsystems umfasst.

9. Luftzufuhrsystem nach Anspruch 8, **dadurch gekennzeichnet, dass** die Befestigungsmittel Anschlussmittel (321, 322) umfassen, um die Vorrichtung zur Geräuschreduzierung (1) drehbar an einer Leitung oder an einem Teil des Luftzufuhrsystems anzuschließen.

10. Luftzufuhrsystem nach Anspruch 8 oder 9, **dadurch gekennzeichnet, dass** die Befestigungsmittel mindestens ein flexibles Element (333) für eine lösbare Verbindung der Vorrichtung zur Geräuschreduzierung (1) in einer Leitung oder in einem Teil des Luftzufuhrsystems umfassen.

11. Luftzufuhrsystem nach einem der Ansprüche 1 bis 10, **dadurch gekennzeichnet, dass** das Gehäuse (3) mindestens ein Gegendruckelement (331, 332) umfasst, welches ausgelegt ist, das schalldämpfende Element (2) in der Umschließung (31) zu halten.

12. Luftzufuhrsystem nach einem der obigen Ansprüche, **dadurch gekennzeichnet, dass** das schalldämpfende Element (2) konfiguriert ist, um das durch das schalldämpfende Element (2) strömende Blowbygas zu filtern und stellt die Filterung der Luft sicher.

13. Luftfilter (4) für ein Luftzufuhrsystem für eine Brennkraftmaschine nach einem der obigen Ansprüche, **dadurch gekennzeichnet, dass** der Luftfilter (4) eine Kammer (42) zur Aufnahme der Vorrichtung zur Geräuschreduzierung (1) umfasst und einen Lufteinlass (411) zum Einführen von Luft in die Vorrichtung zur Geräuschreduzierung (1) hat.

## Revendications

1. Système d'alimentation en air d'un moteur à combustion interne ayant un filtre à air et un dispositif de réduction de bruit (1) qui est monté au sein du système d'alimentation en air de sorte que l'air puisse traverser ledit dispositif (1), ledit dispositif (1) comprenant
- un boîtier (3) comprenant au moins une paroi (311, 312, 313, 314, 315) définissant une enceinte creuse (31), ladite au moins une paroi (311, 312, 313, 314, 315) étant pourvue d'au moins un trou traversant (316), et
- un élément insonorisant (2) situé partiellement à l'intérieur de ladite enceinte creuse (31),
dans lequel ledit dispositif de réduction de bruit (1) est configuré pour permettre le passage d'air à travers ledit élément insonorisant (2) vers l'intérieur de l'enceinte (31) et le passage d'air de l'intérieur vers l'extérieur de ladite enceinte (31) à travers ledit au moins un trou traversant (316),
**caractérisé en ce que**
le système d'alimentation en air comprend en outre une dérivation d'air, qui est ouverte ou fermée par une soupape de libération de pression, et le dispositif de réduction de bruit (1) est installé à l'intérieur dudit filtre à air, dans lequel, en cas de pression en excès en provenance d'un compresseur ou d'un turbocompresseur, l'air comprimé en excès est remis en circulation à travers le dispositif de réduction de bruit (1) vers l'intérieur dudit filtre à air en amont de l'entrée du compresseur ou du turbocompresseur par l'intermédiaire de la dérivation d'air.

2. Système d'alimentation en air selon la revendication 1, **caractérisé en ce que** ladite enceinte (31) comprend une face ouverte (319), l'élément insonorisant (2) étant conçu pour fermer de manière étanche ladite face ouverte (319).

3. Système d'alimentation en air selon la revendication 2, **caractérisé en ce que** ledit élément insonorisant (2) comprend une première partie (21) située à l'extérieur de ladite enceinte (31) et une seconde partie (22) située au sein de ladite enceinte (31), ladite première partie (21) étant conçue pour venir en contact de manière étanche avec la circonférence de ladite face ouverte (319).

4. Système d'alimentation en air selon la revendication 3, **caractérisé en ce que** ledit élément insonorisant (2) est configuré pour permettre le passage d'air à travers ladite première partie (21) vers l'intérieur de l'enceinte (31) par l'intermédiaire de ladite seconde partie (22).

5. Système d'alimentation en air selon la revendication 4, **caractérisé en ce que** ledit élément insonorisant (2) est configuré pour permettre une étanchéité entre ledit boîtier (3) dudit dispositif de réduction de bruit (1) et une paroi inclinée (421) du filtre à air (4), dans lequel l'étanchéité est obtenue par compression du matériau de l'élément insonorisant (2) dans la zone entre le boîtier (3) et la paroi inclinée (421).

6. Système d'alimentation en air selon l'une quelconque des revendications 1 à 5, **caractérisé en ce que** ledit élément insonorisant (2) est formé à partir d'un matériau poreux ouvert.

7. Système d'alimentation en air selon la revendication 6, **caractérisé en ce que** la taille moyenne de pore du matériau poreux est comprise entre 500 µm et 2000 µm.

8. Système d'alimentation en air selon l'une quelconque des revendications 1 à 7, **caractérisé en ce que** ledit boîtier (3) comprend des moyens de fixation (321, 322, 333) à un conduit ou à une partie dudit système d'alimentation en air.

9. Système d'alimentation en air selon la revendication 8, **caractérisé en ce que** lesdits moyens de fixation comprennent des moyens de raccordement (321, 322) pour raccorder en rotation ledit dispositif de réduction de bruit (1) à un conduit ou à une partie dudit système d'alimentation en air.

10. Système d'alimentation en air selon la revendication 8 ou 9, **caractérisé en ce que** lesdits moyens de fixation comprennent au moins un élément flexible (333) pour un raccordement détachable dudit dispositif de réduction de bruit (1) dans un conduit ou une partie dudit système d'alimentation en air.

11. Système d'alimentation en air selon l'une quelconque des revendications 1 à 10, **caractérisé en ce que** ledit boîtier (3) comprend au moins un élément de contrepression (331, 332) conçu pour maintenir ledit élément insonorisant (2) dans l'enceinte (31).

12. Système d'alimentation en air selon l'une quelconque des revendications précédentes, **caractérisé en ce que** l'élément insonorisant (2) est configuré pour filtrer le gaz de soufflage s'écoulant à travers ledit élément insonorisant (2) et assure une filtration de l'air.

13. Filtre à air (4) pour un système d'alimentation en air destiné à un moteur à combustion interne selon l'une quelconque des revendications précédentes, **caractérisé en ce que** le filtre à air (4) comprend une chambre (42) destinée à recevoir ledit dispositif de réduction de bruit (1) et possède une entrée d'air (411) pour introduire de l'air dans ledit dispositif de réduction de bruit (1).
